(19) Europäisches Patentamt
European Patent Office
Office européen des brevets

(11) **EP 0 587 041 B1**

(12) **EUROPÄISCHE PATENTSCHRIFT**

(45) Veröffentlichungstag und Bekanntmachung des Hinweises auf die Patenterteilung:
**17.12.1997 Patentblatt 1997/51**

(51) Int Cl.[6]: **G01S 13/524**

(21) Anmeldenummer: **93114005.7**

(22) Anmeldetag: **02.09.1993**

(54) **Verfahren zur Kompensation eines von einer bewegten Radarantenne erzeugten Signalanteils**

Method of compensation of a part of a signal produced by a moving radar antenna

Procédé de compensation d'une partie d'un signal produit par une antenne radar en mouvement

(84) Benannte Vertragsstaaten:
**DE FR GB NL SE**

(30) Priorität: **08.09.1992 DE 4229951**

(43) Veröffentlichungstag der Anmeldung:
**16.03.1994 Patentblatt 1994/11**

(73) Patentinhaber: **Daimler-Benz Aerospace Aktiengesellschaft**
**81663 München (DE)**

(72) Erfinder: **Schmitt, Peter, Dr.**
**D-89287 Bellenberg (DE)**

(74) Vertreter: **Fröhling, Werner Otto, Dr. et al**
**Daimler-Benz Aerospace AG**
**Patentabteilung**
**Sedanstrasse 10**
**89077 Ulm (DE)**

(56) Entgegenhaltungen:
- **DE-A- 3 841 864**
- **DE-B- 2 738 832**
- **US-A- 3 737 900**
- **US-A- 3 952 302**
- **US-A- 4 104 631**
- **US-A- 4 586 044**
- **US-A- 4 728 953**

**EP 0 587 041 B1**

**Beschreibung**

Die Erfindung betrifft ein Verfahren zur Kompensation eines von einer bewegten Radarantenne erzeugten Signalanteils nach dem Oberbegriff des Patentanspruchs 1.

Bei einer Radaranlage wird das von der Radarantenne empfangene Signal in das Basisband umgesetzt und dort in Abhängigkeit von der Dopplerfrequenz $f_D$ ausgewertet.

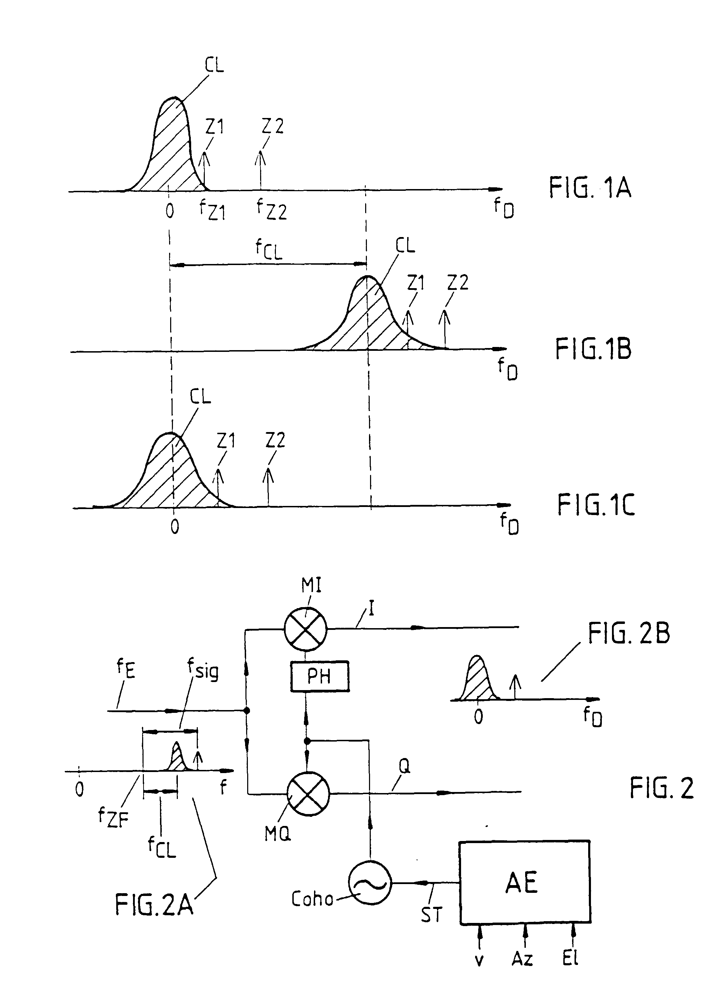

FIG. 1a zeigt schematisch dargestellt ein von der Dopplerfrequenz $f_D$ (Abszisse) abhängiges Spektrum für eine unbewegte (stationäre) Radarantenne. Dabei sind die von ortsfesten Zielen, die auch (Festziel-) Clutter CL genannt werden, herrührenden Signalanteile bei der Dopplerfrequenz $f_D = 0$ angeordnet. Von mit unterschiedlichen Geschwindigkeiten bewegten Zielen Z1, Z2 herrührende Signalanteile sind bei den Dopplerfrequenzen $f_{Z1}$ bzw. $f_{Z2}$ angeordnet.

Befindet sich nun eine Radarantenne auf einem bewegten Träger, beispielsweise einem Flugzeug, so entsteht gemäß FIG. 1b ein von der Geschwindigkeit des Trägers abhängiges Spektrum. Dieses unterscheidet sich von dem Spektrum gemäß FIG. 1a lediglich durch eine Verschiebung um den von der Geschwindigkeit abhängigen Frequenzanteil $f_{CL}$ (Clutterfrequenz).

Für die Auswertung eines solchen Spektrums ist es zweckmäßig, dieses zunächst um die Clutterfrequenz $f_{CL}$ so zu verschieben, daß der Clutter wieder bei der Dopplerfrequenz $f_D = 0$ angeordnet ist (FIG. 1c).

Eine solche Frequenzverschiebung ist mit einer Anordnung gemäß FIG. 2 möglich. Dabei enthält das von der bewegten Radarantenne empfangene Signal im Zwischenfrequenzbereich den Frequenzanteil $f_E = f_{ZF} + f_{sig} + f_{CL}$, wobei $f_{ZF}$ die Zwischenfrequenz, $f_{sig}$ den von bewegten Zielen herrührenden Frequenzanteil (auszuwertender Signalanteil) und $f_{CL}$ die Clutterfrequenz bedeuten. Ein solches Eingangsspektrum ist in FIG. 2a für ein bewegtes Ziel schematisch dargestellt. Ein Signal wird nun mit Hilfe eines Quadraturdemodulators in das Basisband, das die Signalanteile I, Q enthält umgesetzt. Der Quadraturdemodulator enthält im wesentlichen die Mischer MI, MQ sowie einen in seiner Frequenz verstimmbaren Oszillator, der auch Coherent-Oszillator Coho genannt wird. Das von diesem erzeugte Oszillatorsignal wird einem Mischer MQ unmittelbar zugeleitet. Dem anderen Mischer MI ist ein Phasenglied PH vorgeschaltet, das bei dem Oszillatorsignal eine Phasenverschiebung von π/2 (90°) bewirkt. Der Oszillator Coho wird durch ein Stellgrößen-Signal ST verstimmt, welches der Clutterfrequenz $f_{CL}$ entspricht und welches in der Auswerteeinheit AE ermittelt wird. In dieser werden die translatorische Geschwindigkeit v, die Azimuteinstellung Az sowie die Elevationseinstellung El der Radarantenne bezüglich der Bewegungsrichtung berücksichtigt gemäß der Formel

$$f_{CL} \approx 2v/\lambda \cdot \cos Az \cdot \cos El \,,$$

wobei $\lambda$ die Wellenlänge des ausgesandten Radarsignals bedeutet.

Die Verstimmung des Coho ist also ständig entsprechend zu verändern: die Winkel Az und El werden z. B. über Winkelgeber der Antenne ermittelt. Über die ebenfalls gemessene Geschwindigkeit v wird die Clutterfrequenz $f_{CL}$ geschätzt. Auch eine Messung von $f_{CL}$ im sogenannten Signalprocessor ist möglich. Nach dem VCO-Prinzip wird dann der Coho über eine zu $f_{CL}$ proportionale Stellspannung um $f_{CL}$ verstimmt. Im Basisband entsteht dann ein Spektrum entsprechend FIG. 2b.

Ein solches Verfahren, das im wesentlichen mit analogen Signalen arbeitet, ist in nachteiliger Weise technisch aufwendig und daher kostenungünstig.

Der Erfindung liegt die Aufgabe zugrunde, ein gattungsgemäßes Verfahren anzugeben, das kostengünstig und zuverlässig ist und mit dem eine hohe Genauigkeit bei der Kompensation erreicht wird.

Diese Aufgabe wird gelöst durch die im kennzeichnenden Teil des Patentanspruchs 1 angegebenen Merkmale. Vorteilhafte Ausgestaltungen und/oder Weiterbildungen sind den Unteransprüchen entnehmbar.

Ein erster Vorteil der Erfindung besteht darin, daß der Oszillator (Coho) auf die Zwischenfrequenz $f_{ZF}$ fest eingestellt wird. Dadurch wird dieser schaltungsmäßig erheblich vereinfacht, denn es entfällt eine ansonsten nötige VCO-Schaltung ("voltage controlled oscillator"). Außerdem ist ein fest eingestellter Oszillator vorteilhafterweise sehr frequenzstabil, insbesondere bezüglich des sogenannten Driftverhaltens.

Ein zweiter Vorteil besteht darin, daß Korrekturen im Basisband vorgenommen werden. Dieses umfaßt einen wesentlich niedrigeren Frequenzbereich als der ZF-Bereich (Zwischenfrequenz-Bereich), so daß digital arbeitende Verfahren anwendbar sind.

Ein dritter Vorteil besteht darin, daß eine Eichung (Kalibrierung) der Radaranlage über ein Programm ("Software") möglich wird. Ansonsten übliche Stellglieder, z. B. hochgenaue Potentiometer, werden weitgehendst vermieden.

Weitere Vorteile ergeben sich aus der folgenden Beschreibung eines Ausführungsbeispieles.

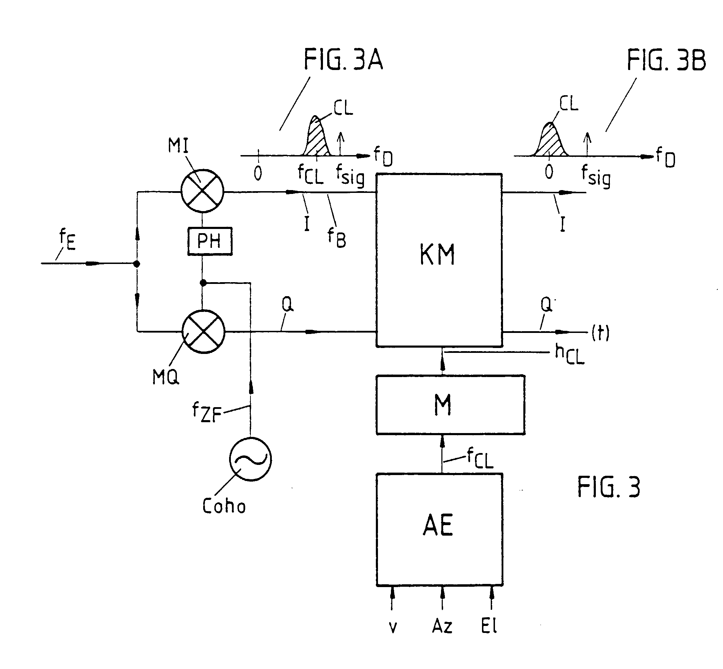

Bei dem Ausführungsbeispiel gemäß FIG. 3 unterscheidet sich der ZF-Bereich von demjenigen entsprechend FIG. 2 lediglich dadurch, daß der kohärente Oszillator Coho eine fest eingestellte Zwischenfrequenz $f_{ZF}$ erzeugt. Lediglich zur besseren Erläuterung der Erfindung wird angenommen, daß das im ZF-Bereich anliegende Signal einen Frequenzanteil $f_E$ entsprechend FIG. 2a besitzt. Wird ein solches beispielhaftes ZF-Signal dem Quadratur-Demodulator MI, MQ,

2

PH, Coho zugeführt, so entsteht an dessen Ausgang im Basisband ein Signal, das den Frequenzanteil $f_B = f_{sig} + f_{CL}$ enthält (FIG. 3). Dabei umfaßt das Basisband beispielsweise einen Frequenzbereich von -50 Hz bis 50 kHz. Dieses in analoger Form vorliegende Basisband-Signal wird nun einem komplexen Multiplizierer KM zugeleitet. Vor diesem wird das Basisband-Signal zunächst digitalisiert, z. B. mit Hilfe eines Analog-/Digital-Wandlers, und dann in digitaler Form mit einem nachfolgend erläutertem Multiplikanden so multipliziert (gefaltet), daß an einem Ausgang des komplexen Multiplizierers KM ein digitales Ausgangssignal entsprechend FIG. 3b entsteht. Dieses enthält bei der Dopplerfrequenz $f_D = 0$ den Clutter CL und bei der Dopplerfrequenz $f_{sig}$ einen Ziel-Signalanteil von dem hier beispielhaft angenommenen einem Ziel.

Die Bildung des erwähnten Multiplikanden $h_{CL}(t)$, der eine Zeitfunktion ist, erfolgt beispielsweise dadurch, daß in einer Auswerteeinheit AE zunächst die Clutterfrequenz $f_{CL}$ ermittelt wird aus der translatorischen Geschwindigkeit v der Radarantenne oder deren Träger, z. B. einem Flugzeug, der Azimuteinstellung Az (Azimutwinkel) sowie der Elevationseinstellung El (Elevationswinkel) der Radarantenne. Ein der Clutterfrequenz $f_{CL}$ entsprechendes Signal wird an eine Anordnung M weitergeleitet, in welcher der zeitabhängige Multiplikand $h_{CL}(t)$ gebildet wird gemäß der Formel

$$h_{CL}(t) = A e^{\,i \int_{o}^{t} f_{CL}(\tau)\,d\tau} \, ,$$

wobei

A    eine Konstante bedeutet, die z. B. empirisch ermittelt wird und

t    die zeitliche Dauer der Integration.

Ein dem so gebildeten Multiplikanden $h_{CL}(t)$ entspechendes Signal wird an den komplexen Multiplizierer KM geleitet, in welchem die komplexe Multiplikation im Basisband stattfindet.

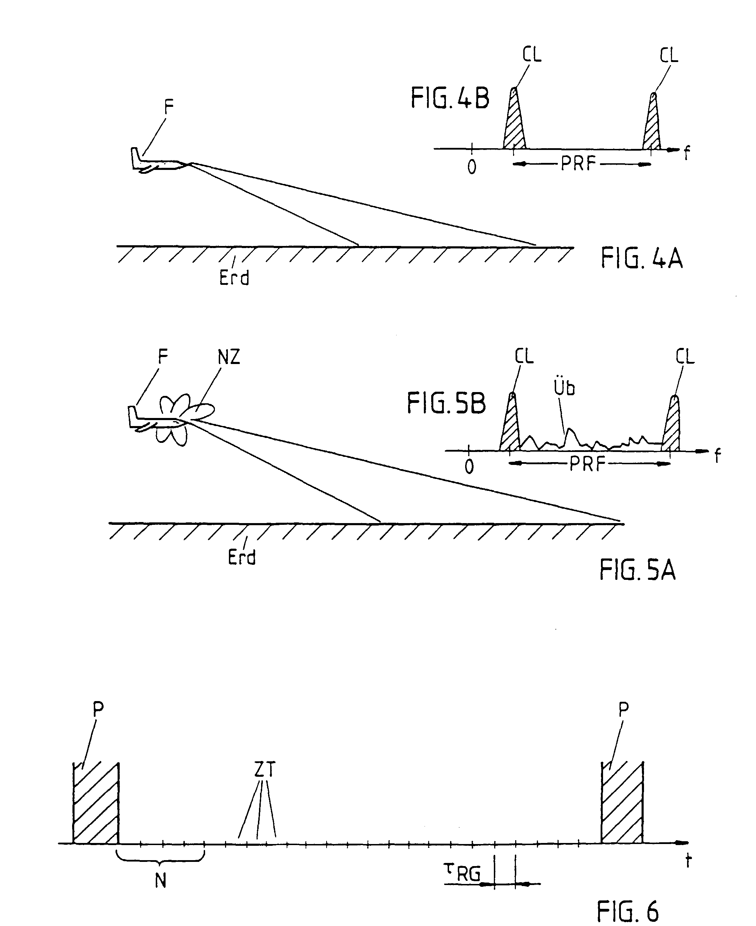

Das beschriebene Verfahren ist besonders zuverlässig, wenn eine Überfaltung des sogenannten Nebenkeulen-Clutters durch die sogenannten Nebenzipfel der Radarantenne vermieden wird. Dieser Sachverhalt wird im folgenden näher erläutert. FIG. 4a zeigt ein Flugzeug F, das an seiner Nase (Spitze) eine Radarantenne besitzt, welche in Richtung des Erdbodens Erd zeigt. Es wird nun angenommen, daß die Radarantenne ein Antennendiagramm (Richtdiagramm) ohne Nebenzipfel besitzt und daß auf dem Erdboden Erd kein bewegtes Ziel vorhanden ist. In diesem Fall enthält das Spektrum des ZF-Signals (FIG, 4b) lediglich Signalanteile, die von dem (Festziel-)Clutter CL herrühren und die sich mit der Pulswiederholfrequenz PRF ("pulse repetition frequency") wiederholen (FIG. 4b).

Besitzt das Antennendiagramm dagegen mehrere Nebenzipfel (FIG. 5a), so enthält das Spektrum des ZF-Signals zwischen den (Festziel-)Clutter-Anteilen erhebliche Signalanteile, die von der erwähnten Überfaltung Üb herrühren (FIG. 5b). Es ist ersichtlich, daß eine derartige Überfaltung eine mögliche Erkennung eines Zieles erschwert. Eine solche Überfaltung ist vermeidbar, wenn eine Radarantenne mit einem möglichst geringen Nebenzipfelanteil zumindest in der Beobachtungsrichtung der Hauptkeule verwendet wird. Dieses ist durch einen entsprechenden mechanischen Aufbau der Radarantenne weitgehendst erreichbar.

Alternativ und/oder zusätzlich dazu ist es besonders vorteilhaft, eine Signalauswertung zu wählen, welche unempfindlich ist gegenüber von der Überfaltung herrührenden Signalanteilen. Dieses wird anhand der FIG. 6 näher erläutert. Diese zeigt das von der Zeit t abhängige Verhalten einer Pulsradaranlage. Diese sendet zeitlich begrenzte Pulse P aus. Die Pulse P werden zeitlich periodisch entprechend der gewählten PRF ausgesandt. Die Zeit zwischen zwei Pulsen wird in Zeittore ZT aufgeteilt, die jeweils eine Zeitdauer $\tau_{RG}$ besitzen. Zwischen zwei Pulsen P sind beispielsweise 200 Zeittore ZT vorhanden. Da sich die Nebenzipfel lediglich in dem sogenannten Nahbereich auswirken, ist es vorteilhaft, die sich unmittelbar an einem (Sende-)Puls P anschließenden Zeittore nicht in eine Signalauswertung einzubeziehen. Es entsteht dann vorteilhafterweise ein Basisband-Signal entsprechend FIG. 4b. Die Anzahl N der Zeittore ZT, in denen keine beschriebene Signalauswertung erfolgt, ergibt sich aus der Formel

$$N - \frac{h_{eff}}{150 \cdot \tau_{RG}[\mu sec]} \, ,$$

wobei

$\tau_{RG}$        die in μsec gemessene Zeitdauer eines Zeittores und

$h_{eff}$      die effektive Flughöhe, gemessen in m, bedeutet.

Dabei wird die effektive Flughöhe aus einem Höhenbereich gewählt, der zwischen der wahren Flughöhe und deren dreifachem liegt. Die Wahl der effektiven Flughöhe ist von dem elektrischen uns/oder mechanischen Aufbau der Radaranlage und/oder der Radarantenne abhängig und wird beispielsweise dadurch ermittelt, daß der Clutter CL im Basisband möglichst genau auf die Dopplerfrequenz $f_D = 0$ zentriert wird.

Das beschriebene Verfahren ist vorteilhaft anwendbar für Radaranlagen, die mit einer sogeannnten "Medium PRF" oder einer "Low PRF" arbeiten, d. h. bei einer PRF, die beispielsweise in einem Bereich zwischen ca. 1 kHz und 20 KHz liegt.

Die Erfindung ist nicht auf die beschriebenen Ausführungsbeispiele beschränkt, sondern sinngemäß auf weitere anwendbar, beispielsweise auf andere Puls-Radare, die z. B. in einem Kraftfahrzeug angeordnet sind.


**Patentansprüche**

1. Verfahren zur Kompensation eines von einer bewegten Radarantenne erzeugten Signalanteils, wobei ein in einer Zwischenfrequenzlage vorliegendes Signal durch Mischung mit Hilfe eines Oszillatorsignals und einer Quadratur-Demodulation in ein Basisbandsignal umgesetzt wird, <u>dadurch gekennzeichnet,</u>

   - daß das Oszillatorsignal auf eine der unbewegten Radarantenne entsprechende Zwischenfrequenz eingestellt wird,

   - daß ein der Bewegung sowie der Azimut- und Elevationseinstellung der Radarantenne entsprechender zeitabhängiger Multiplikand ($h_{CL}$) ermittelt wird und

   - daß das nach der Quadratur-Demodulation vorliegende Signal durch eine komplexe Multiplikation, die entsprechend dem Multiplikanden ($h_{CL}$) eingestellt wird, korrigiert wird.

2. Verfahren nach Anspruch 1, dadurch gekennzeichnet, daß der zeitabhängige Multiplikand ($h_{CL}$) ermittelt wird gemäß der Formel

$$h_{CL}(t) = Ae^{i \int_o^t f_{CL}(\tau) d\tau} \, ,$$

   wobei

   A   eine Konstante,
   t    eine zeitliche Dauer der Integration und $f_{CL}$ eine Clutterfrequent bedeuten.

3. Verfahren nach Anspruch 1 oder Anspruch 2, dadurch gekennzeichnet, daß der Multiplikand ($h_{CL}$) derart gewählt wird, daß von dem Clutter herrührende Signalanteile im Basisband um die Dopplerfrequenz $f_D = 0$ zentriert werden.

4. Verfahren nach einem der vorherigen Ansprüche, dadurch gekennzeichnet, daß bei einer Puls-Radaranlage die Zeit zwischen zwei Sende-Pulsen in Zeittore aufgeteilt wird und daß in den Zeittoren, welche zeitlich unmittelbar auf einen Sende-Puls folgen, eine Signalauswertung vermieden wird.

5. Verfahren nach einem der vorherigen Ansprüche, dadurch gekennzeichnet, daß ein Puls-Radar verwendet wird, daß in einem Flugzeug bewegt wird.

6. Verfahren nach einem der vorherigen Ansprüche, dadurch gekennzeichnet, daß die Anzahl (N) der Zeittore, in denen keine Signalauswertung erfolgt, ermittelt wird gemäß der Formel

$$N \sim \frac{h_{eff}}{150 \cdot \tau_{RG}[\mu sec]},$$

wobei

$h_{eff}$     die effektive Flughöhe und
$\tau_{RG}$     die Zeitdauer eines Zeittores bedeuten.

7.  Verfahren nach einem der vorherigen Ansprüche, dadurch gekennzeichnet, daß die effektive Flughöhe ($h_{eff}$) aus einem Bereich gewählt wird, welcher der einfachen bis dreifachen tatsächlichen Flughöhe entspricht.

8.  Verfahren nach einem der vorherigen Ansprüche, dadurch gekennzeichnet, daß die Radaranlage mit Medium-PRF- oder Low-PRF-Sendepulsen arbeitet.

**Claims**

1.  Method for the compensation of a signal component produced by a moved radar aerial, wherein a signal present in an intermediate frequency position is transformed into a base band signal by mixing with the aid of an oscillator signal and a quadrature demodulation, characterised thereby,

    -   that the oscillator signal is set to an intermediate frequency corresponding with the unmoved radar aerial,
    -   that a time-dependent multiplicand ($h_{CL}$) is ascertained, which corresponds with the setting in azimuth and elevation of the radar aerial and
    -   that the signal present after the quadrature demodulation is corrected by a complex multiplication which is set according to the multiplicand ($h_{CL}$).

2.  Method according to claim 1, characterised thereby, that the time-dependent multiplicand ($h_{CL}$) is ascertained according to the formula

$$h_{CL}(t) = Ae^{\,i\int_{o}^{t} f_{CL}(\tau)\,d\tau},$$

wherein

A     signifies a constant,
t     a time duration nf the integration and
$f_{CL}$     a clutter frequency.

3.  Method according to claim 1 or claim 2, characterised thereby, that the multiplicand ($h_{CL}$) is chosen in such a manner that signal components emanating from the clutter are centred around the Doppler frequency $f_D = 0$ in the base band.

4.  Method according to one of the preceding claims, characterised thereby, that in a pulse radar installation, the time between two transmitted pulses is divided up into time gates and that a signal evaluation is avoided in the time gates which follow immediately in time on a transmitted pulse.

5.  Method according to one of the preceding claims, characterised thereby, that a pulse radar is used, which is moved in an aircraft.

6.  Method according to one of the preceding claims, characterised thereby, that the number (N) of the time gates, in which no signal evaluation takes place, is ascertained according to the formula

$$N - \frac{h_{eff}}{150 \cdot \tau_{RG}[\mu sec]},$$

wherein

$h_{eff}$  signifies the effective flying height and
$R_G$  the time duration of a time gate in microseconds.

7. Method according to one of the preceding claims, characterised thereby, that the effective flying height ($h_{eff}$) is chosen from a range which corresponds with one to three times the actual flying height.

8. Method according to one of the preceding claims, characterised thereby, that the radar installation operates with medium pulse repetition frequency transmitted pulses or with low pulse repetition frequency transmitted pulses.


**Revendications**

1. Procédé de compensation d'une partie d'un signal produit par une antenne radar mobile, selon lequel un signal se trouvant dans la plage de fréquence intermédiaire est converti en un signal en bande de base par mélange à l'aide d'un signal d'oscillateur et d'une démodulation en quadrature, caractérisé en ce que

   - le signal d'oscillateur est réglé sur une fréquence intermédiaire correspondant à l'antenne radar fixe,
   - un multiplicande ($h_{CL}$) fonction du temps correspondant au déplacement ainsi qu'au réglage en azimut et en élévation de l'antenne radar est détecté et
   - le signal existant après démodulation en quadrature est corrigé par une multiplication complexe, qui est réglée de façon correspondante au multiplicande ($h_{CL}$).

2. Procédé selon la revendication 1, caractérisé en ce que le multiplicande fonction du temps ($h_{CL}$) est détecté selon la formule

$$h_{CL}(t) = Ae^{i\int_{0}^{t} f_{CL}(\hat{\tau})d\tau}$$

où

A  est une constante,
t  est une durée temporelle de l'intégration et
$f_{CL}$  est une fréquence parasite.

3. Procédé selon la revendication 1 ou la revendication 2, caractérisé en ce que le multiplicande ($h_{CL}$) est choisi de telle sorte que des parties de signal provenant de la fréquence parasite sont centrées en bande de base sur la fréquence Doppler $f_D = 0$.

4. Procédé selon l'une quelconque des revendications précédentes, caractérisé en ce que, dans le cas d'une installation de radar pulsé, le temps entre deux impulsions d'émission est partagé en secteurs temporels et en ce que, dans les secteurs temporels, qui suivent temporellement directement une impulsion d'émission, une évaluation de signal est évitée.

5. Procédé selon l'une quelconque des revendications précédentes, caractérisé en ce qu'un radar pulsé est utilisé dans un aéronef.

6. Procédé selon l'une quelconque des revendications précédentes, caractérisé en ce que le nombre (N) des secteurs temporels, dans lesquels n'est effectuée aucune évaluation de signal, est déterminé selon la formule

$$N - \frac{h_{eff}}{150 \cdot \tau_{RG}[\mu sec]}$$

où

$h_{eff}$    représente l'altitude de vol effective et
$\tau_{RG}$    la durée d'un secteur temporel.

7.  Procédé selon l'une quelconque des revendications précédentes, caractérisé en ce que l'altitude effective de vol ($h_{eff}$) est choisie à partir d'une plage qui correspond à une fois à trois fois l'altitude effective de vol.

8.  Procédé selon l'une quelconque des revendications précédentes, caractérisé en ce que l'installation radar opère avec des impulsions d'émission à PRF moyenne ou PRF faible.

FIG. 1A

FIG.1B

FIG.1C

FIG. 2B

FIG. 2

FIG.2A

FIG. 3A

FIG. 3B

FIG. 3

FIG.4B

FIG. 4A

FIG.5B

FIG.5A

FIG. 6